# FASCICULE DE BREVET EUROPEEN

(11) **EP 1 875 567 B1**
(45) Date de publication et mention de la délivrance du brevet: **15.12.2010**
(21) Numéro de dépôt: 06743653.5
(22) Date de dépôt: 07.04.2006
(51) Int. Cl.: H01S 3/109

(54) **DISPOSITIF LASER LINEAIRE MONOLITHIQUE MONOFREQUENCE, ET SYSTEM COMPRENANT UN TEL DISPOSITIF.**
MONOLITHISCHES EINFREQUENZ-LINEARLASERBAUELEMENT UND SYSTEM DAMIT
SINGLE-FREQUENCY MONOLITHIC LINEAR LASER DEVICE AND SYSTEM COMPRISING SAME

(30) Priorité: 15.04.2005 FR 0503798
(43) Date de publication de la demande: 09.01.2008
(73) Titulaire: Oxxius SA, 22300 Lannion (FR)
(72) Inventeur: GEORGES, Thierry, F-22700 Perros-Guirec (FR)
(74) Mandataire: Pontet, Bernard
(86) Numéro de dépôt international: PCT/FR2006/000770
(87) Numéro de publication internationale: WO 2006/108950

(56) Documents cités:
- EP-A- 1 630 911
- FR-A- 2 860 928
- US-A- 5 256 164
- US-B1- 6 259 711
- FAN T Y: "SINGLE-AXIAL MODE, INTRACAVITY DOUBLED ND:YAG LASER" IEEE JOURNAL OF QUANTUM ELECTRONICS, IEEE SERVICE CENTER, PISCATAWAY, NJ, US, vol. 27, no. 9, 1 septembre 1991 (1991-09-01), pages 2091-2093, XP000234357 ISSN: 0018-9197 cité dans la demande
- KENJI SUZUKI ET AL: "LOW-NOISE DIODE-PUMPED INTRACAVITY-DOUBLED LASER WITH OFF-AXIALLY CUT ND:YVO4" OPTICS LETTERS, OSA, OPTICAL SOCIETY OF AMERICA, WASHINGTON, DC, US, vol. 19, no. 20, 15 octobre 1994 (1994-10-15), pages 1624-1626, XP000445442 ISSN: 0146-9592 cité dans la demande
- MATTHEWS D G ET AL: "BLUE MICROCHIP LASER FABRICATED FROM ND:YAG AND KNBO3" OPTICS LETTERS, OSA, OPTICAL SOCIETY OF AMERICA, WASHINGTON, DC, US, vol. 21, no. 3, 1 février 1996 (1996-02-01), pages 198-200, XP000629023 ISSN: 0146-9592 cité dans la demande

## Description

La présente invention se rapporte à un dispositif laser à solide monolithique pompé par diode laser, et concerne plus particulièrement le laser à solide doublé intra-cavité monomode. Elle se rapporte également à un procédé mis en oeuvre dans un tel dispositif.

La présente invention trouve une application particulièrement intéressante, mais non exclusive, dans le domaine de la génération de luminescence laser bleue ou verte.

L'émission laser d'un faisceau de bonne qualité spatiale et spectrale dans le visible à 473 nm par exemple, à partir d'une diode multimode présente beaucoup d'intérêt pour des applications industrielles est médicales notamment. Cette longueur d'onde, dite harmonique, peut s'obtenir à partir du doublage en fréquence d'une émission laser à une longueur d'onde, dite fondamentale, à 946 nm du grenat d'aluminium et d'yttrium dopé au néodyme (Nd:YAG).

D'une façon générale, un laser doublé intra-cavité comprend une diode laser pour pomper un laser à solide, tel que le Nd:YAG par exemple, formant amplificateur à 946 nm. Pour réaliser le doublage, on associe à l'amplificateur un cristal non linéaire convertissant le signal fondamental proche infrarouge en signal visible par doublage fréquentiel ("frequency doubling" en langue anglaise, aussi nommé "second harmonic génération SHG"). On obtient ainsi une longueur d'onde harmonique égale à la longueur d'onde fondamentale divisée par deux. L'amplificateur et le cristal non linéaire sont contenus dans une cavité dont les deux surfaces extrêmes opposées dans le trajet du faisceau laser sont réflectives pour certaines longueurs d'onde.

Cependant, si l'on s'intéresse à une émission continue, la puissance de l'émission fondamentale est inférieure à la puissance de la diode laser et le doublage de fréquence est alors très inefficace.

On connaît le brevet américain US 4 809 291, intitulé "Diode pumped laser and doubling to obtain blue light", dans lequel R.L. Byer et T.Y. fan proposent un doublage intra-cavité pour augmenter la puissance d'une onde fondamentale à 946 nm et ainsi augmenter l'efficacité de doublage.

Dans un article intitulé "Efficient blue emission from an intracavity-doubled 946 nm Nd:YAG laser" publié en 1988 dans la revue Optics Letters (vol. 13, pp. 137-139), Dixon et al. présentent une émission de 5 mW de bleu (473 nm) par un micro-laser à base de Nd:YAG doublé intra-cavité. La concentration du Nd est de 1.1 at.%. L'efficacité de doublage n'est que de 2%.

Le problème principal de ces lasers doublés intra-cavité est la présence de modes axiaux et de polarisation parasites qui réduisent l'efficacité du laser et qui sont à l'origine de fortes fluctuations de puissance. En exemple, Matthews et al., dans un article intitulé "Diode pumping in a blue (473 nm) Nd:YAG/KNb03 microchip laser" (CLEO'96, vol. 9, p. 174) produisent 26.5 mW de bleu avec des fluctuations d'intensité supérieures à 10%.

Plus précisément, le doublage de fréquence intra-cavité induit des pertes sélectives qui sont croissantes avec la puissance de pompe pour l'émission laser dominante. Lorsque l'efficacité de doublage augmente, l'inversion de population moyenne de la cavité doit augmenter pour compenser l'excès de perte. Toutefois, cela permet aux modes adjacents et à l'émission de polarisation orthogonale de commencer à laser. Pour les modes adjacents, cet effet s'ajoute à celui du "hole burning spatial" qui permet déjà aux modes adjacents de laser.

Les différents modes lasant dans la cavité sont couplés dans le milieu amplificateur (compétition pour le gain) et dans le milieu doubleur de fréquence (addition de fréquences). Ces couplages sont non linéaires et participent à une dynamique non linéaire complexe. Cette dernière se traduit par une fluctuation de puissance forte voire chaotique.

Si le doublage de fréquence est de "Type I", les modes de polarisation orthogonale ne subissent pas de doublage de fréquence efficace (absence d'adaptation de phase entre le fondamental et l'harmonique). Ces modes stabilisent l'inversion de population en croissant avec la puissance de pompe. Ils ralentissent l'efficacité de conversion qui a besoin d'une augmentation d'inversion de population pour croître. Seuls des effets de "hole burning spatial" autorisent une légère croissance de l'efficacité de conversion.

Plusieurs méthodes ont été présentés pour pendre le laser monomode ou pour découpler les modes dans le cristal non linéaire. Elles peuvent être rangées dans trois catégories :
a) La première est l'introduction d'un étalon dans la cavité. Cette méthode, divulguée notamment dans le brevet américain US 5,838,713 de Y. Shimoji, pose plusieurs problèmes. En effet, l'étalon induit des pertes dans la cavité, sauf s'il est formé par les faces du YAG et du cristal doubleur. Dans ce dernier cas, il requiert une très grande précision de positionnement (sub-micrométrique) difficile à obtenir de manière industrielle et à stabiliser. Une manière de résoudre ce problème est de contacter optiquement le milieu amplificateur avec le cristal doubleur en incluant un angle sur une partie de la face de contact. Cet angle induit un petit espacement d'air entre les deux matériaux. Cette méthode fragilise le contact et donc l'intégrité d'un laser monolithique et ne permet pas la protection de l'interface par une colle.
b) La seconde catégorie joue sur la polarisation du fondamental. Le milieu amplificateur peut être inséré entre deux lames quart d'onde pour éviter l'effet "hole burning spatial", voir notamment G. Hollemann et al., dans "Frequency-stabilized diode-pumped Nd:YAG laser at 946 nm with harmonics at 473 nm and 237 nm", Opt. Lett. 19, p.192 en février 1994. Un inconvénient de cette méthode est l'introduction de pertes dans la cavité.

Par doublage de type I, on entend une réalisation dans laquelle le faisceau laser fondamental se propage sur l'un des axes optiques du cristal (en général l'axe lent) et le faisceau laser harmonique se propage sur l'autre axe optique du cristal, orthogonal au premier. On fait du doublage de type I lorsqu'il est possible de couper le cristal de manière à égaler l'indice de réfraction d'un axe optique à la longueur d'onde fondamentale avec l'indice de réfraction de l'autre axe optique à la longueur d'onde harmonique. C'est le cas du KNbO₃.

Par doublage de type II, on entend une réalisation dans la quelle le faisceau laser fondamental est présent sur les deux axes et le coefficient de conversion est optimisé lorsque la polarisation du laser fondamental fait un angle de 45° par rapport aux axes optiques.
c) La troisième méthode consiste à réduire la longueur de la cavité. Elle a été proposée par A. Mooradian dans le brevet US 5,256,164, oct. 1993.

Pour une largeur de raie d'émission à 946 nm de 1 nm (comparée à 0.6 nm pour la raie à 1.064 µm), la formule de Mooradian impose une longueur de cavité inférieure à 300 µm, incluant le YAG et le KNb0₃. La concentration en Nd dans les microchips publiés ou brevetés à ce jour n'excède pas 1.1 at.%. Cela correspond à une atténuation de 0.85 mm⁻¹ à 808.4 nm, c'est à dire 8.1 % de pompe absorbée par 100 µm d'épaisseur et 15.6% de pompe absorbée par 200 µm. D'autre part, les 100 ou 200 nm de KNbO₃ n'apportent pas une efficacité de conversion suffisante. Ainsi, un laser microchip suivant l'inégalité de Mooradian semble ne pas être en mesure d'émettre plus de quelques mW de bleu avec 1 W de pompe d'une diode laser.

On connaît le document "Low-noise diode-pumped intracavity-doubled laser with of-axially cut Nd :YVO4", Opt. Lett. 19, p. 1624 (K. Suzuki et al.) décrivant l'utilisation d'un walk-off en combinaison avec une lentille plan-concave. Un tel dispositif ne procure pas une grande fiabilité.

Par ailleurs, on connaît une méthode efficace proposée par T. Y. Fan, "Single-Axial Mode, Intracavity Doubled Nd:YAG Laser", IEEE Journal of Quantum Electronics, vol. 27, 9.9.91 pour rendre un laser doublé intra-cavité mono-fréquence. Dans cette méthode, le milieu amplificateur (Nd:YAG) est coupé à l'angle de Brewster par rapport à l'air. Le cristal non linéaire, biréfringent, est attaqué à 45° par le fondamental (doublage de type II). Les deux angles de Brewster induisent des pertes importantes à la polarisation orthogonale et l'empêchent de laser. Elles induisent également des pertes à toute longueur d'onde dont la polarisation a été tournée par le cristal biréfringent. Cette modulation de perte en fonction de la longueur d'onde peut rendre le laser monomode. Cette méthode ne s'applique cependant pas à un doublage de fréquence de type 1 car par principe le signal à la fréquence fondamentale est sur l'un des axes optiques du cristal non linéaire. D'autre part, à cause de la double réfraction, il n'est pas possible d'accoler le cristal amplificateur coupé à l'angle de Brewster avec le cristal non linéaire. En effet, la double réfraction introduit des effets de phase qui font que les faisceaux réfléchis par la face externe de la cavité ne se recombinent pas lorsqu'ils retournent dans l'amplificateur. Finalement, la difficulté majeure du design proposé par Fan est de garder la longueur totale de la cavité précise à mieux que quelques centaines de nanomètres afin d'éviter tout saut de mode et ses instabilités de puissance subséquentes. En effet, une augmentation (ou réduction) de la longueur de cavité de λ/4 (soit approximativement 250 nm) fait passer d'un fonctionnement monomode à un fonctionnement bimode. Une augmentation supplémentaire de longueur de λ/4 refait passer à un fonctionnement monomode sur le mode adjacent.

On connaît également le document FR-A-2 860 928 décrivant un dispositif laser doublé intracavité pour la génération de luminescence laser bleue ou verte. Ce dispositif comprend un milieu amplificateur en Nd:YAG excité par un faisceau laser de longueur d'onde fondamentale, la face de sortie de ce milieu amplificateur étant découpée selon l'angle de Brewster pour ladite longueur d'onde fondamentale, et un cristal biréfringent KNbO₃ de doublage de fréquence. Le dispositif est conçu de façon monolithique.

Le document Matthews D.G. et al. : « Blue Microchip laser fabricated from Nd:YAG and KNbO3 », Optics Letters, Optical society of America, vol. 21, no. 3, 1 février 1996, décrit un dispositif laser monolithique comprenant un milieu amplificateur Nd:YAG, et un milieu non linéaire biréfringent à faces parallèles pour le doublage de fréquence.

Le document EP-A-1 630 911 décrit un dispositif laser monolithique pompé par diode et intégrant un filtre de Lyot. Ce dispositif comprend un milieu amplificateur, un milieu non linéaire biréfringent à faces parallèles pour le doublage de fréquence, un milieu polarisant qui possède une face de sortie perpendiculaire au faisceau de longueur d'onde fondamentale sortant du milieu polarisant.

Le document US-B1-6 259 711 décrit un dispositif laser monolithique comprenant un milieu amplificateur Nd:YAG, un milieu non linéaire biréfringent à faces parallèles pour le doublage de fréquence, et un milieu polarisant pour sélectionner une polarisation du faisceau laser de longueur d'onde fondamentale.

La présente invention vise à remédier à la plupart des inconvénients précités en proposant un laser à solide doublé intra-cavité qui présente une dimension compacte, offre une grande stabilité de fonctionnement, et autorise des doublages de fréquence de type I. Un autre but de l'invention est de proposer un laser à solide accordable capable de fonctionner en monomode. L'invention a encore pour but un laser à solide puissant quel que soit le niveau de puissance de la diode laser de pompage. L'invention a encore pour but un laser à solide présentant une grande fiabilité.

On atteint au moins l'un des buts précités avec un dispositif laser définit dans la revendication 1, qui comprend :
- un milieu amplificateur apte à générer un faisceau laser de longueur d'onde fondamentale ;
- un milieu non linéaire biréfringent à faces parallèles pour le doublage de fréquence du faisceau laser de longueur d'onde fondamentale de façon à générer un faisceau laser de longueur d'onde harmonique ;
- un milieu polarisant pour sélectionner une polarisation du faisceau laser de longueur d'onde fondamentale, ce milieu polarisant étant tel que l'onde fondamentale à sa sortie reste parallèle à l'onde fondamentale à son entrée.

Selon l'invention, le milieu polarisant comprend une face de sortie perpendiculaire à l'onde fondamentale sortant de ce milieu polarisant. En outre, le milieu amplificateur, le milieu non linéaire biréfringent et le milieu polarisant sont solidaires entre eux de façon à constituer une cavité résonante monolithique. Ce milieu polarisant est choisi de manière à ce qu'il ne dévie pas, dans l'absolu, le faisceau de l'onde fondamentale, c'est-à-dire que l'onde fondamentale à la sortie du milieu polarisant est parallèle à l'onde fondamentale en entrée de ce milieu. Ainsi, en accolant les milieux amplificateur, polarisant et non linéaire, on peut constituer une cavité résonante monolithique.

La cavité se présente de préférence sous forme linéaire.

Avec le dispositif selon la présente invention, on obtient une structure monolithique du fait que les différents milieux peuvent être solidarisés ou accolés entre eux. L'élément polarisant, ne déviant pas le faisceau dans l'absolu (une double déviations peut se produit dans des angles de Brewster comme on le verra plus loin), permet d'obtenir une cavité linéaire (cavité pour laquelle le faisceau laser est fresque partout dans la cavité parallèle à un axe) où les faces d'entrée et de sortie sont parallèles. La présente invention propose donc un dispositif laser à solide d'une grande fiabilité puisqu'il est facile à fabriquer et présente une grande stabilité dans le temps. Les différents éléments composants le dispositif peuvent être conçus de façon indépendante puis assemblés optiquement. La cavité est mécaniquement solide.

En particulier, le milieu amplificateur, le milieu polarisant et le milieu non linéaire biréfringent sont accolés de façon linéaire; chaque milieu comprenant une face d'entrée et une face de sortie parallèles entre elles et avec les autres faces des autres milieux; ces faces étant orthogonales à la direction de sortie du faisceau laser de longueur d'onde harmonique. La cavité se termine d'une part par la face d'entrée du milieu amplificateur et d'autre part par la face de sortie du milieu non linéaire biréfringent.

La sélection se fait soit par atténuation d'une polarisation de l'onde fondamentale soit par déviation de celle-ci au moyen d'un miroir comme on le verra par la suite. La sélection d'une polarisation de l'onde fondamentale consiste en fait à empêcher l'oscillation de la polarisation qui ne produit pas de bleu par doublage de fréquence. Ce qui fait que ce laser à solide selon l'invention peut générer un signal puissant quel que soit le niveau de puissance d'une pompe utilisée. Cela permet également de réaliser le filtre de Lyot.

Selon l'invention, le milieu non linéaire biréfringent comprend un cristal non linéaire de type I. Ce qui n'est pas le cas dans le document de Fan par exemple.

Selon l'invention, le milieu non linéaire biréfringent est constitué par un cristal non linéaire de type **I** dont les axes de biréfringence font des angles non nuls modulo π/2 radians par rapport à la polarisation sélectionnée par le milieu polarisant. On dit que le cristal non linéaire est disposé hors axes. Avec une telle disposition, le dispositif constitue un filtre de Lyot. L'invention est ainsi remarquable par le fait qu'on utilise un cristal non linéaire de type I hors axes, ce qui est généralement considéré comme une façon "anormale" et peu efficace. En effet, le doublage de type I est le plus efficace lorsque la polarisation de l'onde fondamentale est parallèle à l'un des axes de biréfringence du cristal non linéaire. Le mode de réalisation selon l'invention permet d'utiliser un seul cristal pour les fonctions de non-linéarité et de biréfringence nécessaire pour le filtre de Lyot. Dans le document de Fan, la cavité n'est pas monolithique, et le doublage est de type II. Si on applique directement le principe de Fan à un doublage de type I, le filtre de Lyot n'existe plus, car alors les axes du cristal non linéaire sont alignés avec la polarisation sélectionné.

Selon une première caractéristique avantageuse de l'invention, le milieu non linéaire étant disposé hors axes, on lui accole un cristal biréfringent de telle sorte que les axes de biréfringence de ce cristal biréfringent restent parallèles à ceux dudit cristal non linéaire. L'avantage d'un tel mode de réalisation est que la longueur du cristal non linéaire n'est pas uniquement imposée par des exigences du filtre de Lyot. En effet, l'ajout de biréfringence permet de compenser une partie de ces exigences et de permettre ainsi une longueur du cristal non linéaire convenable pour le doublage de fréquence.

Selon une deuxième caractéristique avantageuse l'invention, le milieu biréfringent est indépendant du cristal non linéaire. Dans ce cas, l'efficacité de doublage incite à orienter les axes, ou l'un des axes, du cristal non linéaire parallèlement à la polarisation sélectionnée par le milieu polarisant. En outre, un cristal biréfringent est accolé audit cristal non linéaire de telle sorte que les axes de biréfringence de ce cristal biréfringent font des angles non nuls modulo π/2 radians par rapport à la polarisation sélectionnée par le milieu polarisant, de sorte que le dispositif constitue un filtre de Lyot.

Ladite polarisation sélectionnée est de préférence celle adaptée à l'accord de phase entre l'onde fondamentale et l'onde harmonique.

Une telle combinaison d'une interface à l'angle de Brewster et d'un cristal (ou plusieurs cristaux) biréfringent hors axes permet de sélectionner un unique mode. En effet, l'interface de Brewster induit une perte sélective à la polarisation orthogonale. Seules les longueurs d'ondes pour lesquelles le déphasage dû à la biréfringence est un multiple de 2π conservent la polarisation à faible perte à l'interface de Brewster. Cela constitue un filtre périodique ayant son minimum de pertes aux longueurs d'onde λₘ=(Σδnᵢlᵢ)/m où δnᵢ et lᵢ sont respectivement la différence d'indice et la longueur des éléments biréfringents hors axes. La somme ne s'applique que dans la première caractéristique avantageuse de l'invention. La longueur d'onde λₘ dépend de la température car les longueurs de cristaux et les différences d'indice dépendant de la température. Le filtre est ainsi accordable en température. L'Intervalle Spectral Libre du filtre (c'est-à-dire la différence de longueur d'onde entre deux pics de transmission) est où λ est la longueur d'émission du laser.

Le filtre est le plus sélectif lorsque les axes de biréfringence forment un angle θ=π/4 radians (modulo π/2) par rapport à la polarisation favorisée par le milieu polarisant.

En ajustant notamment la longueur des cristaux biréfringents hors axe, il est possible de ne sélectionner qu'un unique mode dans la bande d'émission (largeur à mi-hauteur Δλₘ) pourvu que ISL et Δλₘ soient du même ordre de grandeur à un facteur 2 ou 3 près). De préférence, les paramètres des cristaux biréfringents sont choisis tels que l'ISL du filtre soit compris entre 0,5 et 3 fois la largeur d'émission à mi-hauteur (Δλₘ) du milieu amplificateur.

En d'autres termes, l'indice du milieu isotrope et l'angle θ associés à la longueur du cristal biréfringent peuvent être ajustés afin de n'autoriser qu'un seul mode dans la cavité.

Selon l'invention, les angles de taille du cristal non linéaire sont tels que l'ajustement de la température (dans une plage raisonnable) du cristal permettent un accord de phase entre l'onde fondamentale et l'onde doublée en fréquence. Le cristal non linéaire peut par exemple être constitué à partir du niobate de potassium KNbO₃ ou à partir du borate de lithium LBO. Le cristal biréfringent peut être constitué à partir du vanadate YVO₄.

Selon une première variante avantageuse de l'invention, le milieu polarisant comprend un élément primaire suivi d'un milieu intermédiaire et d'un élément secondaire dont l'indice de réfraction est sensiblement identique à l'indice de réfraction de l'élément primaire; la face de sortie de l'élément primaire et la face d'entrée de l'élément secondaire étant parallèles et coupées selon l'angle de Brewster pour la longueur d'onde fondamentale.

Le milieu intermédiaire peut être constitué d'air. Dans ce cas, l'élément primaire est solidaire de l'élément secondaire au moyen d'un collage dynamique ou au moyen du contactage avec une rondelle trouée. Le milieu intermédiaire peut aussi être constitué par de la silice.

Dans la présente première variante, lorsque le milieu polarisant est disposé entre le milieu amplificateur et le milieu non linéaire biréfringent, l'élément primaire peut être constitué par le milieu amplificateur. Plus précisément, le milieu amplificateur présente en entrée une face perpendiculaire à la direction de propagation de l'onde fondamentale, et en sortie une face taillée selon l'angle de Brewster par rapport à cette onde fondamentale. De préférence, le milieu amplificateur est constitué par le grenat d'aluminium et d'yttrium YAG dopé au néodyme Nd (Nd:YAG) ; l'élément secondaire étant constitué par le grenat d'aluminium et d'yttrium (YAG) non dopé. Le cristal Nd:YAG peut être de forme cylindrique avec une face d'entrée formant un miroir plan.

Le milieu polarisant peut aussi être distinct du milieu amplificateur. Dans ce cas, l'élément primaire et l'élément secondaire peuvent être constitués par le grenat d'aluminium et d'yttrium YAG non dopé. Autrement, l'élément primaire et l'élément secondaire peuvent être constitués par de la silice, le milieu intermédiaire étant alors du grenat d'aluminium et d'yttrium YAG non dopé.

Avec un tel dispositif, pourvu que les éléments primaires et secondaires aient le même angle (cela est facilement réalisé lorsqu'ils sont fabriqués ensembles), il n'est pas nécessaire d'atteindre une précision trop importante (inférieur à quelques minutes d'angle) lors de la réalisation des angles de Brewster, cela permet une industrialisation plus rapide et moins coûteuse.

Lorsqu'on n'utilise pas les angles de Brewster, on peut se servir de l'effet "walk-off" (ou double réfraction) associé à une modulation de perte spatiale, conformément à une seconde variante de l'invention. Ainsi, le milieu polarisant est constitué par un cristal biréfringent coupé hors axes de façon à présenter un fort "walk-off" entre les deux polarisations du faisceau laser de longueur d'onde fondamentale ; la modulation de perte spatiale pouvant-être obtenue par la fermeture de la cavité par une lentille plan-convexe.

Le document "Low-noise diode-pumped intracavity-doubled laser with of-axially cut Nd :YVO4 ", -Opt. Lett. 19, p. 1624 (K. Suzuki et al.) décrit l'utilisation d'une lentille plan-concave ne permettant pas un assemblage monolithique. D'autre part, le milieu amplificateur étant polarisé, il n'est pas évident de savoir quel dispositif (polariseur ou émission polarisé) prédomine dans la sélection de polarisation.

Selon un autre aspect de l'invention, on prévoit un système laser comprenant un moyen de pompage d'un dispositif laser à solide tel que décrit ci-dessus. Avantageusement, le faisceau laser émis par ledit moyen de pompage se propage selon une direction orthogonale à la face d'entrée du milieu amplificateur du dispositif laser à solide.

D'autres avantages et caractéristiques de l'invention apparaîtront à l'examen de la description détaillée d'un mode de mise en oeuvre nullement limitatif, et des dessins annexés, sur lesquels :
- La figure 1 est une vue schématique d'un laser à solide selon l'invention comprenant un milieu amplificateur taillé selon l'angle de Brewster, le milieu polarisant comprenant une lame d'air ;
- La figure 2 est une vue schématique d'un laser à solide selon l'invention comprenant un milieu amplificateur taillé selon l'angle de Brewster, le milieu polarisant comprenant une lame de silice ;
- La figure 3 est une vue schématique d'un laser à solide selon l'invention dans lequel le milieu polarisant comprend une lame d'air entre deux parois taillées selon l'angle de Brewster ;
- La figure 4 est une vue schématique d'un laser à solide selon l'invention dans lequel le milieu polarisant comprend une lame de silice entre deux parois taillées selon l'angle de Brewster ;
- La figure 5 est une vue schématique d'un laser à solide selon l'invention dans lequel le milieu polarisant comprend un cristal biréfringent avec walk-off et un miroir plano-convexe ;
- La figure 6 est une vue schématique illustrant trois exemples de mise en oeuvre de la biréfringence pour atteindre les propriétés voulues de filtrage tout en garantissant un effet non linéaire effectif.

Bien que l'invention n'y soit pas limitée, on va maintenant décrire un dispositif laser monolithique doublé en fréquence en intra-cavité-comportant un laser Nd:YAG émettant à 946 nm, doublé intra-cavité à 473 nm avec un cristal de KNbO₃.

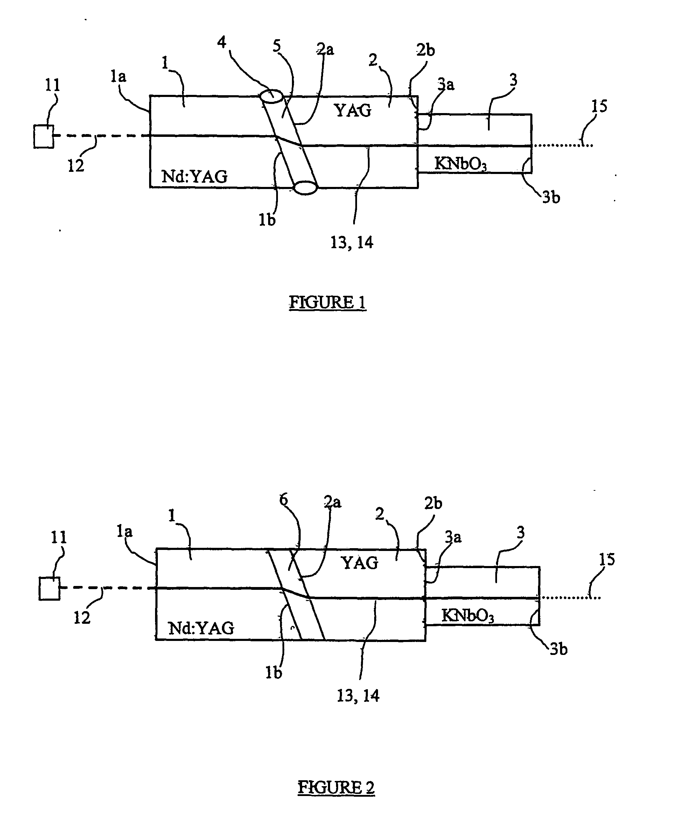

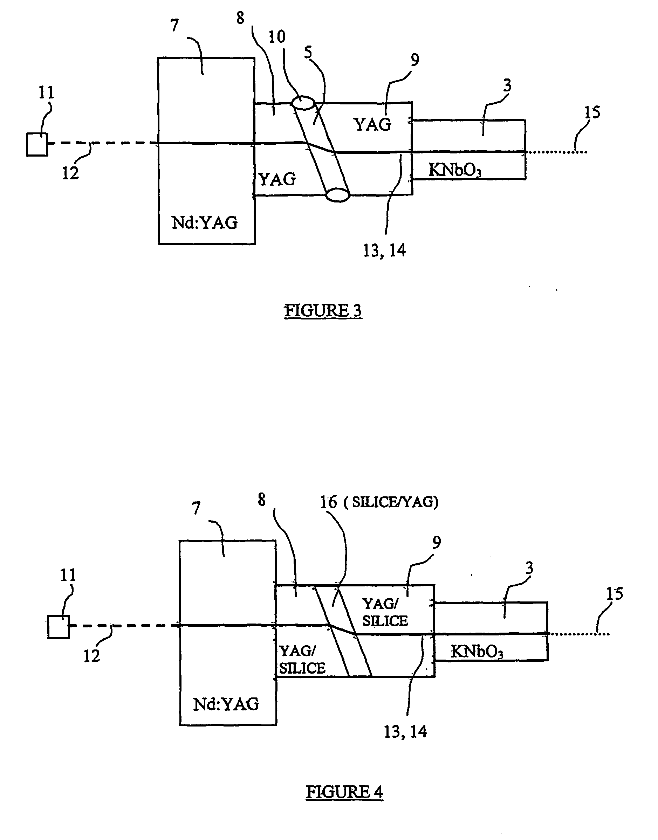

En référence aux figures 1 et 2, on voit une diode laser de pompage 11 émettant un faisceau laser 12 à 808 nm vers une cavité composée d'un assemblage de trois cristaux 1, 2, et 3. Le cristal amplificateur, 1 est du Nd:YAG. Son indice de réfraction est n₁ = 1.82 à 946 nm. La face d'entrée 1a de ce cristal 1 est traitée de façon à constituer un miroir plan. Sa face de sortie 1b est taillée à l'angle de Brewster calculé à partir de l'indice n₁ et de l'indice n₅ ou n₆ du milieu 5 ou 6. Sur la figure 1, le milieu 5 est constitué par l'air alors que sur la figure 2 le milieu 6 est une lame parallèle de silice. Cette lame parallèle 5 ou 6 est coincée entre la face de sortie 1b du cristal amplificateur 1 et la face d'entrée 2a d'un cristal constitué du grenat d'aluminium et d'yttrium YAG non dopé (YAG blanc) 2 d'indice n₁. Cette face 2b est également taillée selon l'angle de Brewster et disposée parallèlement à 1a face 1b. De préférence les deux faces 1b et 2a sont polies simultanément et l'assemblage peut alors se faire à l'aveugle. Ce mode de mise en oeuvre est très tolérant en ce qui concerne la précision de la découpe selon l'angle de Brewster, ce qui facilite la production de tels lasers à solide. Lorsque la lame parallèle est de l'air, on peut utiliser un espaceur à faces parallèles ou un collage dynamique 4 ou 10 contrôlé par laser comme on peut le voir sur les figures 1 et 3. Ce collage est réalisé à la périphérie de la lame parallèle 5. Par contre sur la figure 2, on utilise une lame de silice 6 qui est accolée aux deux faces parallèles 1b et 2a.

Sur la face de sortie 2b, on accole un cristal doubleur de fréquence biréfringent 3 constitué de niobate de potassium KNbO₃.

Les trois cristaux 1, 2 et 3 forment une cavité résonante linéaire.

La face d'entrée 1a du Nd:YAG 1 et la face de sortie 3b du KNbO₃ 3 sont parallèles et traitées de façon conventionnelle afin de constituer une cavité résonnante. Le faisceau laser 15 sortant de la face 3b peut être à 946 nm ou à 473 nm.

Le schéma de la figure 1 est basé sur une polarisation verticale du signal à 946 nm dans le Nd:YAG. L'axe vertical est situé dans le plan de la figure, l'axe horizontal étant perpendiculaire à ce plan. L'homme du métier saura aisément adapter ce schéma pour une polarisation linéaire horizontale ou quelconque.

La polarisation du signal fondamental est la verticale dans le -cas présenté. Si l'axe c du cristal de niobate de potassium était horizontal, les axes optiques seraient horizontaux et verticaux. Le signal fondamental se propagerait alors dans un axe de la biréfringence et sa polarisation ne pourrait plus être tournée. Si l'axe c et donc les axes de biréfringence sont tournés comme dans le cas présente, le fondamental n'est plus dans les axes de biréfringence et sa polarisation est donc tournée lors de la propagation dans le cristal. La sélection de mode par rotation de polarisation peut alors jouer.

Dans le cristal biréfringent KNbO₃, la face d'entrée 3a contient l'axe c et coupe le plan ab selon un angle ϕ = 32° par rapport à l'axe b de façon à obtenir un accord de phase entre les longueurs d'onde 946 nm et 473 nm à 308 K. L'homme du métier saura modifier cet angle pour une adaptation de phase à d'autres températures. A 946 nm, l'indice de réfraction sur l'axe c est n_{3f} = 2.127 et l'indice de réfraction sur l'axe orthogonal est n_{3S} = 2.238. La biréfringence est donc caractérisée par Δn₃ = 0.111. D'une façon générale, le dispositif selon l'invention peut constituer un filtre de Lyot tant que les axes du cristal biréfringent ne sont pas parallèles à l'interface de Brewster.

En ce qui concerne le chemin optique suivi par les différents faisceaux lasers, le faisceau laser 12 émis par la pompe 11 atteint le cristal Nd:YAG 1 sur la face d'entrée la selon une direction normale à cette face 1a. Le Nd:YAG 1 ainsi excité, génère un faisceau laser 13 qui oscille entre les faces miroirs 1a et 3b. Au passage de la lame parallèle 5, 6, le faisceau laser 13 subit une déviation à chaque face 1b, 2a de sorte que le faisceau laser 13 sortant de la lame parallèle 5, 6 est parallèle au faisceau laser 13 entrant dans la lame parallèle 5, 6. Le passage entre le YAG blanc 2 est le cristal linéaire biréfringent KNbO₃ ne dévie pas le faisceau laser 13. Le doublage de fréquence s'effectue au sein de ce cristal KNbO₃ 3, cela se traduisant par la génération du faisceau laser de longueur d'onde harmonique 14 qui sort du laser par la face 3b.

La cavité présente donc des faces d'entrée et de sortie parallèles entre elles, mais orthogonales au faisceau laser issu de la pompe et au faisceau laser sortant du laser à solide.

Sur les figures 1 et 2, le milieu amplificateur est constitué par le Nd:YAG 1. Le milieu polarisant comprend un élément primaire qui est également ce cristal Nd:YAG 1, ou plus précisément la face de sortie 1b de ce cristal 1 ; un milieu intermédiaire qui est la lame parallèle 5, 6 ; et un élément secondaire qui est le cristal YAG blanc 2.

Au contraire, sur les figures 3 et 4, le milieu polarisant est distinct du milieu amplificateur qui est constitué d'un cristal 7 Nd:YAG non taillé. Le milieu polarisant comporte un élément primaire 8 et un élément secondaire 9 qui peuvent être du YAG blanc (non dopé) en association avec une lame parallèle 5, 16 qui peut être de l'air 5 moyennant un collage dynamique 10 ou de la silice 16. Les deux éléments primaire et secondaire peuvent également être de la silice lorsque la lame parallèle est du YAG blanc ou de l'air. La mise en oeuvre et le fonctionnement reste équivalent à ce qui a été décrit en référence aux figures 1 et 2.

En complément notamment de ce qui précède, lorsque la lame parallèle est une lame de silice accolée, on peut réaliser une couverture à l'endroit où les faisceaux laser passent, de sorte que ces faisceaux laser traversent en fait l'air sans pénétrer dans la silice.

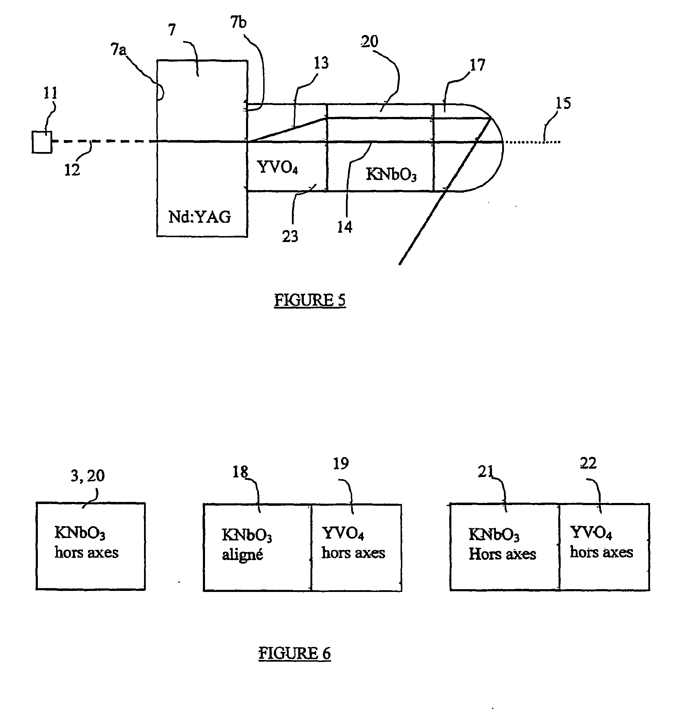

Le dispositif de la figure 5 est particulier dans le sens qu'il ne comporte pas d'angle de Brewster. Le milieu amplificateur est encore un cristal Nd:YAG

7 à parois parallèles 7a et 7b. Sur la face 7b, on accole un cristal biréfringent ["walh-off"] 23 YVO₄ taillé de telle manière à maximiser le "walk-off" entre les deux polarisations. Le cristal de KNbO₃ 20 accolé hors axes, en combinaison avec une lentille 17 plan-convexe ferment la cavité. La lentille corrige les imperfections d'angle des différents cristaux. Les deux polarisations sont celle du faisceau laser de longueur d'onde fondamentale 13 et celle du faisceau laser de longueur d'onde harmonique 14. Le faisceau laser 13 est éjecté de la cavité résonante par réflexion sur la partie convexe de la lentille 17.

Sur les figures 1 à 5, le cristal de KNbO₃ est utilisé comme élément non linéaire et biréfringent, sa forte sensibilité à la température permet d'accorder la longueur d'onde d'émission 14. Les axes de ce cristal sont orientés à 45° des axes de polarisation de l'élément polarisant. On peut aussi utiliser le LBO comme cristal non linéaire et biréfringent.

Toutefois, comme on le voit sur la figure 6, on peut séparer la fonction de non linéarité en utilisant le cristal 18 de KNbO₃ ou LBO dont les axes sont alignés avec ceux du polariseur en utilisant le cristal 19 de vanadate YVO₄ dont les axes sont tournés. Le cristal 19 de vanadate (YVO₄) ferme la cavité laser. Cela rajoute un élément et une interface, mais l'avantage est l'utilisation du cristal non linéaire 18 dans ses axes, ce qui procure une efficacité de doublage maximale pour un doubleur de type I notamment. Le YVO₄ est recommandé comme cristal biréfringent du fait de sa forte biréfringence. Du fait de la faible dépendance en température des indices de réfraction du YVO₄, le laser est moins accordable, mais en revanche, la plage de fonctionnement monofréquence est plus large en température, soit environ 25 fois supérieure à celle obtenue avec le PCNbO₃ hors axes. La conséquence de la faible accordabilité est que l'Intervalle Spectral Libre ISL du filtre de Lyot est de préférence de l'ordre de la largeur d'émission de la transition laser. En effet, avec un ISL trop faible, il y a danger de laser sur plusieurs modes. Avec un ISL trop grand, il y a danger de ne trouver aucun pic du filtre dans la bande d'émission.

Sur la figure 6, on voit également un troisième exemple dans lequel on accole un cristal non linéaire KNbO₃ 21 disposé hors axes avec un cristal biréfringent YVO₄ 22 également disposé hors axes. Cette solution permet d'ajuster l'ISL tout en gardant une longueur de KNbO₃ optimale pour le doublage de fréquence.

Bien sûr, l'invention n'est pas limitée aux exemples qui viennent d'être décrits et de nombreux aménagements peuvent être apportés à ces exemples sans sortir du cadre de l'invention.

## Revendications

1. Aucune partie des revendications ne doit être soulignée
1. Dispositif laser comprenant :
- un milieu amplificateur (1, 7) apte à générer un faisceau laser (13) de longueur d'onde fondamentale ;
- un milieu (3, 20, 20) non linéaire biréfringent à faces parallèles pour le doublage de fréquence du faisceau laser de longueur d'onde fondamentale de façon à générer un faisceau laser (14) de longueur d'onde harmonique ;
- un milieu polarisant (1b, 5, 6, 2, 8, 9, 16, 23) pour sélectionner une polarisation du faisceau laser de longueur d'onde fondamentale, ce milieu polarisant étant tel que l'onde fondamentale à sa sortie reste parallèle à l'onde fondamentale à son entrée ;
ce milieu polarisant (1b, 5, 6, 2, 8, 9, 16, 23)
- comprenant une face de sortie (2b) perpendiculaire au faisceau de longueur d'onde fondamentale sortant de ce milieu polarisant ; et en ce que le milieu amplificateur, le milieu non linéaire biréfringent et le milieu polarisant sont solidaires entre eux de façon à constituer une cavité résonante monolithique
**caractérisé en ce que** le milieu non linéaire biréfringent est constitué par :
- un cristal non linéaire de type I constitué de niobate de potassum KNbo₃ ou de borate de lithium LBo dont les axes de biréfringence font des angles sensiblement égal à π/4 radian modulo π/2 radians par rapport à la polarisation sélectionnée par le milieu polarisant, de sorte que le dispositif constitue un filtre de Lyot; ou
- un cristal non linéaire de type I dont l'un de ses axes de biréfringence est parallèle à la polarisation sélectionnée par le milieu polarisant : et **en ce qu'**un cristal biréfringent est accolé audit cristal non linéaire de telle sorte que les axes de biréfringence de ce cristal biréfringent font des angles sensiblement égal à π/4 radian modulo π/2 radians par rapport à la polarisation sélectionnée par le milieu polarisant, de sorte que le dispositif constitue un filtre de Lyot ; ladite polarisation sélectionnée étant celle adaptée à l'accord de phase entre l'onde fondamentale et l'onde harmonique.

2. Dispositif selon la revendication 1, **caractérisé en ce que** lorsque le milieu non linéaire biréfringent est constitué par un cristal non linéaire de type I dont les axes de biréfringence font des angles sensiblement égal à π/4 radians modulo π/2 radians par rapport à la polarisation sélectionnée par le milieu polarisant, un cristal biréfringent est accolé audit cristal non linéaire de telle sorte que les axes de biréfringence de ce cristal biréfringent restent parallèles à ceux dudit cristal non linéaire.

3. Dispositif selon la revendication 1, **caractérisé en ce que** lorsque le milieu non linéaire biréfringent est constitué par un cristal non linéaire de type I dont l'un de ses axes de biréfringence est parallèles à la polarisation sélectionnée par le milieu polarisant, le dispositif constitue un filtre de Lyot dont l'intervalle spectral libre ISL est compris entre 0.5 et 3 fois la largeur d'émission du faisceau laser de longueur d'onde harmonique.

4. Dispositif selon la revendications 2 ou 3 **caractérisé en ce que** le cristal biréfringent (19) est constitué à partir du vanadate YVO₄.

5. Dispositif selon l'une quelconque des revendications 1 à 4, **caractérisé en ce que** le cristal non linéaire (3, 18) est constitué à partir du niobate de potassium KNbO₃.

6. Dispositif selon l'une quelconque des revendications 1 à 4, **caractérisé en ce que** le cristal non linéaire (18) est constitué à partir du borate de lithium LBO.

7. Dispositif selon l'une quelconque des revendications précédentes, **caractérisé en ce que** le milieu amplificateur, le milieu polarisant et le milieu non linéaire biréfringent sont accolés de façon linéaire ; chaque milieu comprenant une face d'entrée et une face de sortie parallèles entre elles et avec les autres faces des autres milieux ; ces faces étant orthogonales à la direction de sortie du faisceau laser de longueur d'onde harmonique.

8. Dispositif selon l'une quelconque des revendications précédentes, **caractérisé en ce que** le milieu polarisant comprend un élément primaire (1b, 8) suivi d'un milieu intermédiaire (5, 6, 16) et d'un élément secondaire (2, 9) dont l'indice de réfraction est sensiblement identique à l'indice de réfraction de l'élément primaire ; la face de sortie de l'élément primaire et la face d'entrée de l'élément secondaire étant parallèles et coupées selon l'angle de Brewster pour la longueur d'onde fondamentale.

9. Dispositif selon la revendication 8, **caractérisé en ce que** le milieu intermédiaire est constitué d'air (5).

10. Dispositif selon la revendication 9, **caractérisé en ce que** l'élément primaire est solidaire de l'élément secondaire au moyen d'un collage dynamique (4, 10).

11. Dispositif selon la revendication 8, **caractérisé en ce que** le milieu intermédiaire est constitué par de la silice (6, 16).

12. Dispositif selon l'une quelconque des revendications 8 à 11, **caractérisé en ce que**, le milieu polarisant étant disposé entre le milieu amplificateur et le milieu non linéaire biréfringent, l'élément primaire est constitué par le milieu amplificateur (1,1b).

13. Dispositif selon la revendication 12, **caractérisé en ce que** le milieu amplificateur est constitué par le grenat d'aluminium et d'yttrium YAG dopé au néodyme Nd (1) ; l'élément secondaire étant constitué par le grenat d'aluminium et d'yttrium YAG non dopé (2).

14. Dispositif selon l'une quelconque des revendications 8 à 11, **caractérisé en ce que** l'élément primaire et l'élément secondaire sont constitués par le grenat d'aluminium et d'yttrium YAG non dopé (8, 9).

15. Dispositif selon la revendications 13 ou 14, **caractérisé en ce que** l'élément primaire et l'élément secondaire sont constitués par de la silice, le milieu intermédiaire étant grenat d'aluminium et d'yttrium YAG non dopé.

16. Dispositif selon l'une quelconque des revendication 1 à 5, **caractérisé en ce que** le milieu polarisant est constitué par un cristal biréfringent (20) coupé hors axes de façon à présenter un effet "walk-off' entre les deux polarisations du faisceau laser de longueur d'onde fondamentale ; la cavité résonante étant fermée par une lentille plan-convexe.

17. Système laser comprenant un moyen de pompage (11) d'un dispositif laser à solide selon l'une quelconque des revendications précédentes, le faisceau laser émis par ledit moyen de pompage se propageant selon une direction orthogonale à la face d'entrée du milieu amplificateur du dispositif laser à solide.

## Claims

1. Laser device comprising:
- an amplifying medium (1, 7) capable of generating a laser beam (13) of fundamental wavelength;
- a birefringent non-linear medium (3, 20, 20) with parallel faces for frequency doubling of the laser beam of fundamental wavelength so as to generate a laser beam (14) of harmonic wavelength;
- a polarizing medium (1b, 5, 6, 2, 8, 9, 16, 23) for selecting a polarization of the laser beam of fundamental wavelength, this polarizing medium being such that the fundamental wave at its output remains parallel to the fundamental wave at its input;
this polarizing medium (1b, 5, 6, 2, 8, 9, 16, 23) comprising an output face (2b) perpendicular to the laser beam of fundamental wavelength exiting from this polarizing medium; and in that the amplifying medium, the birefringent non-linear medium and the polarizing medium are firmly attached so as to constitute a monolithic resonant cavity, **characterized in that** the birefringent non-linear medium is constituted by :
- a type I non-linear crystal constituted by potassium niobate KNbO₃ or by lithium borate LBO, the birefringent axes of which form angles approximately equal to π/4 radian modulo π/2 radians with respect to the polarization selected by the polarizing medium such that the device constitutes a Lyot filter ; or
- a type I non-linear crystal of which one of its birefringence axes is parallel to the polarization selected by the polarizing medium; and **in that** a birefringent crystal is joined to said non-linear crystal in such a way that the birefringence axes of this birefringent crystal form angles approximately equal to π/4 radian modulo π/2 radians with respect to the polarization selected by the polarizing medium such that the device constitutes a Lyot filter; said selected polarization being suitable for phase matching between the fundamental wave and the harmonic wave.

2. Device according to claim 1, **characterized in that** when the birefringent non-linear medium is constituted by a type I non-linear crystal the birefringent axes of which form angles approximately equal to π/4 radians modulo π/2 radians with respect to the polarization selected by the polarizing medium, a birefringent crystal is joined to said non-linear crystal in such a way that the birefringence axes of this birefringent crystal remain parallel to those of said non-linear crystal.

3. Device according to claim 1, **characterized in that** when the birefringent non-linear medium is constituted by a type I non-linear crystal of which one of its birefringence axes is parallel to the polarization selected by the polarizing medium, the device constitutes a Lyot filter the free spectral band FSB of which is comprised between 0.5 and 3 times the emission width of the laser beam of harmonic wavelength.

4. Device according claim 2 or 3, **characterized in that** the birefringent crystal (19) is constituted from vanadate YVO₄.

5. Device according to any one of claims 1 to 4, **characterized in that** the non-linear crystal (3, 18) is constituted from potassium niobate KNbO₃.

6. Device according to any one of claims 1 to 4, **characterized in that** the non-linear crystal (18) is constituted from lithium borate LBO.

7. Device according to any one of the foregoing claims, **characterized in that** the amplifying medium, the polarizing medium and the birefringent non-linear medium are joined in a linear fashion; each medium comprising an input face and an output face which are mutually parallel and parallel with the other faces of the other media; these faces being orthogonal to the output direction of the laser beam of harmonic wavelength.

8. Device according to any one of the foregoing claims, **characterized in that** the polarizing medium comprises a primary element (1b, 8) followed by an intermediate medium (5, 6, 16) and a secondary element (2, 9) the refractive index of which is substantially identical to the refractive index of the primary element; the output face of the primary element and the input face of the secondary element being parallel and cut according to the Brewster angle for the fundamental wavelength.

9. Device according to claim 8, **characterized in that** the intermediate medium is constituted by air (5).

10. Device according to claim 9, **characterized in that** the primary element is firmly attached to the secondary element by means of a dynamic bonding agent (4, 10).

11. Device according to claim 8, **characterized in that** the intermediate medium is constituted by silica (6, 16).

12. Device according to any one of claims 8 to 11, **characterized in that**, the polarizing medium being arranged between the amplifying medium and the birefringent non-linear medium, the primary element is constituted by the amplifying medium (1, 1b).

13. Device according to claim 12, **characterized in that** the amplifying medium is constituted by yttrium aluminium garnet YAG doped with neodymium Nd (1); the secondary element being constituted by undoped yttrium aluminium garnet YAG (2).

14. Device according to any one of claims 8 to 11, **characterized in that** the primary element and the secondary element are constituted by undoped yttrium aluminium garnet YAG (8, 9).

15. Device according to claim 13 or 14, **characterized in that** the primary element and the secondary element are constituted by silica, the intermediate medium being undoped yttrium aluminium garnet YAG.

16. Device according to any one of claims 1 to 5, **characterized in that** the polarizing medium is constituted by a birefringent crystal (20) cut off-axis so as to have a "walk-off" effect between the two polarizations of the laser beam of fundamental wavelength; the resonant cavity being closed by a planoconvex lens.

17. Laser system comprising a pumping means (11) for a solid-state laser device according to any one of the foregoing claims, the laser beam emitted by said pumping means being propagated along a direction orthogonal to the input face of the amplifying medium of the solid-state laser device.

## Patentansprüche

1. Laservorrichtung, umfassend:
- ein Verstärkungsmedium (1, 7) geeignet zur Erzeugung eines Laserstrahls (13) mit Grundwellenlänge;
- ein doppelbrechendes nichtlineares Medium (3, 20, 20) mit parallelen Flächen zur Frequenzverdopplung des Laserstrahls mit Grundwellenlänge, zur Erzeugung eines Laserstrahls (14) mit harmonischer Wellenlänge;
- ein polarisierendes Medium (1b, 5, 6, 2, 8, 9, 16, 23) zur Auswahl einer Polarisation des Laserstrahls mit Grundwellenlänge, wobei dieses polarisierende Medium so ist, dass die Grundwelle an seinem Ausgang parallel zur Grundwelle an seinem Eingang bleibt;
wobei dieses polarisierende Medium (1b, 5, 6, 2, 8, 9, 16, 23) eine senkrecht zum aus diesem polarisierenden Medium heraustretenden Laserstrahl mit Grundwellenlänge Austrittsfläche (2b) ausweist; und dass das Verstärkungsmedium, das doppelbrechende nichtlineare Medium und das polarisierende Medium miteinander fest verbunden sind, so dass sie einen monolithischen Resonanzhohlraum bilden, **dadurch gekennzeichnet, dass** das doppelbrechende nichtlineare Medium daraus besteht :
- einem Typ-1 nichtlinearen Kristall aus Kaliumniobat KNbO₃ oder aus Lithiumborat LBO, deren doppelbrechenden Achsen Winkel im Wesentlichen gleich π/4 Radiant Modulo π/2 Radiants in Bezug auf die durch das polarisierende Medium ausgewählte Polarisation bilden, so dass die Vorrichtung ein Lyotfilter bildet;
- einem Typ-I nichtlinearen Kristall, wobei eine von dessen doppelbrechenden Achsen parallel zur durch das polarisierende Medium ausgewählten Polarisation ist, und dass ein doppelbrechendes Kristall angrenzend an dem besagten nichtlinearen Kristall ist, so dass die doppelbrechenden Achsen dieses nichtlinearen Kristalls Winkel im Wesentlichen gleich π/4 Radiant Modulo π/2 Radiants in Bezug auf die durch das polarisierende Medium ausgewählte Polarisation bilden, so dass die Vorrichtung ein Lyotfilter bildet, wobei die besagte ausgewählte Polarisation die zur Phasenabstimmung zwischen der Grundwelle und der harmonischen Welle ist.

2. Vorrichtung nach Anspruch 1, **dadurch gekennzeichnet, dass**, wenn das doppelbrechende nichtlineare Medium aus einem Typ-I nichtlinearen Kristall besteht, deren doppelbrechenden Achsen Winkel im Wesentlichen gleich π/4 Radiant Modulo π/2 Radiants in Bezug auf die durch das polarisierende Medium ausgewählte Polarisation bilden, ist ein doppelbrechendes Kristall an dem besagten nichtlinearen Kristall angrenzend, so dass die doppelbrechenden Achsen dieses doppelbrechenden Kristalls parallel zu den des besagten nichtlinearen Kristalls bleiben.

3. Vorrichtung nach Anspruch 1, **dadurch gekennzeichnet, dass**, wenn das doppelbrechende nichtlineare Medium aus einem Typ-I nichtlinearen Kristall besteht, wobei eine von dessen doppelbrechenden Achsen parallel zur durch das polarisierende Medium ausgewählten Polarisation ist, bildet die Vorrichtung ein Lyotfilter dessen freie Spektralbereich FSB zwischen 0,5 und 3 Mal die Emissionsbreite des Laserstrahls mit harmonischer Wellenlänge liegt.

4. Vorrichtung nach Anspruch 2 oder 3, **dadurch gekennzeichnet, dass** das doppelbrechende Kristall (19) aus Vanadate YVO₄ besteht.

5. Vorrichtung nach einem der Ansprüche 1 bis 4, **dadurch gekennzeichnet, dass** das nichtlineare Kristall (3, 18) aus Kaliumniobat KNbO₃ besteht.

6. Vorrichtung nach einem der Ansprüche 1 bis 4, **dadurch gekennzeichnet, dass** das nichtlineare Kristall (18) aus Lithiumborat LBO besteht.

7. Vorrichtung nach einem der voranstehenden Ansprüche, **dadurch gekennzeichnet, dass** das Verstärkungsmedium, das polarisierende Medium und das doppelbrechende nichtlineare Medium linear angrenzend sind, wobei jedes Medium eine Eintrittsfläche und eine Austrittsfläche ausweist, die miteinander und mit den anderen Flächen der anderen Media parallel sind, wobei diese Fläche orthogonal zur Ausgangsrichtung des Laserstrahls mit harmonischer Wellenlänge.

8. Vorrichtung nach einem der voranstehenden Ansprüche, **dadurch gekennzeichnet, dass** das polarisierende Medium ein primäres Element (1b, 8) umfasst, gefolgt von einem Zwischenmedium (5, 6, 16) und einem sekundären Element (2, 9), dessen Brechungsindex im wesentlichen identisch mit dem Brechungsindex des primäres Elements ist, wobei die Austrittsfläche des primären Elements und die Eintrittsfläche des sekundären Elements parallel sind und nach dem Brewster-Winkel für die Grundwellenlänge geschnitten sind.

9. Vorrichtung nach Anspruch 8, **dadurch gekennzeichnet, dass** das Zwischenmedium aus Luft (5) besteht.

10. Vorrichtung nach Anspruch 9, **dadurch gekennzeichnet, dass** das primäre Element mit dem sekundären Element durch eine dynamische Anklebung fest verbunden ist.

11. Vorrichtung nach Anspruch 8, **dadurch gekennzeichnet, dass** das Zwischenmedium aus Siliciumdioxid (6, 16) besteht.

12. Vorrichtung nach einem der Ansprüche 8 bis 11, **dadurch gekennzeichnet, dass** das primäre Element aus dem Verstärkungsmedium (1, 1b) besteht, wobei das polarisierende Medium zwischen dem Verstärkungsmedium und dem doppelbrechenden nichtlinearen Medium liegt.

13. Vorrichtung nach Anspruch 12, **dadurch gekennzeichnet, dass** das Verstärkungsmedium aus mit Neodym Nd dotiertem Yttrium-Aluminium-Granat YAG (1) besteht; wobei das sekundäre Element aus dem undotierten Yttrium-Aluminium-Granat YAG (2) besteht.

14. Vorrichtung nach einem der Ansprüche 8 bis 11, **dadurch gekennzeichnet, dass** das primäre Element und das sekundäre Element aus dem undotierten Yttrium-Aluminium-Granat YAG (8, 9) bestehen.

15. Vorrichtung nach Anspruch 13 oder 14, **dadurch gekennzeichnet, dass** das primäre Element und das sekundäre Element aus Siliciumdioxid bestehen, wobei das Zwischenmedium undotierte Yttrium-Aluminium-Granat YAG ist.

16. Vorrichtung nach einem der Ansprüche 1 bis 5, **dadurch gekennzeichnet, dass** das polarisierende Medium aus einem doppelbrechenden Kristall (20) besteht, der off-Axis abgeschnitten ist, um ein "Walk-off" Effekt zwischen den beiden Polarisationen des Laserstrahls mit Grundwellenlänge aufzuweisen, wobei der Resonanzhohlraum mit einer Plankonvexlinse geschlossen ist.

17. Lasersystem mit einer Pumpeinrichtung (11) für einer Festkörperlaservorrichtung nach einem der voranstehenden Ansprüche, wobei der von der Pumpeinrichtung abgestrahlte Laserstrahl entlang einer Richtung orthogonal zur Eintrittsfläche des verstärkenden Mediums der Festkörperlaservorrichtung strahlt.
